# EUROPÄISCHE PATENTSCHRIFT

(11) **EP 0 810 129 B1**
(45) Veröffentlichungstag und Bekanntmachung des Hinweises auf die Patenterteilung: **13.09.2000**
(21) Anmeldenummer: 97107349.9
(22) Anmeldetag: 03.05.1997
(51) Int. Cl.: B60R 21/32, B60R 22/46, B60R 21/13

(54) **Auslöseverfahren für passive Sicherheitseinrichtungen in Fahrzeugen**
Releasing method for passive safety devices in vehicles
Procédé de déclenchement d'un système de sécurité passif dans un véhicule

(30) Priorität: 14.05.1996 DE 19619412
(43) Veröffentlichungstag der Anmeldung: 03.12.1997
(73) Patentinhaber: TEMIC Semiconductor GmbH, 74072 Heilbronn (DE)
(72) Erfinder: Buchheim, Timm, 74523 Schwäbisch Hall (DE); Schäfer, Gerhard, Dr., 74189 Weinsberg (DE)
(74) Vertreter: Maute, Hans-Jürgen, Dipl.-Ing.

(56) Entgegenhaltungen:
- EP-A- 0 311 039
- EP-A- 0 517 253
- WO-A-90/09298
- WO-A-93/09008
- DE-A- 2 123 359
- DE-A- 3 816 588
- DE-A- 4 424 551
- DE-A- 19 537 546

## Beschreibung

Die Erfindung betrifft ein Verfahren zur Auslösung einer passiven Sicherheitsvorrichtung in einem Fahrzeug für Fahrzeuginsassen gemäß dem Oberbegriff des Patentanspruches 1 sowie eine Vorrichtung gemäß dem Oberbegriff des Anspruchs 10.

Passive Sicherheitsvorrichtungen in Fahrzeugen, wie beispielsweise Airbag, Gurtstraffer oder Überrollbügel, dienen dazu, die Fahrzeuginsassen im Falle eines Aufpralls (Crash) des Fahrzeuges vor Verletzungen zu schützen.

So wird in der DE 44 20 114 A1 eine Auslösevorrichtung für Personenschutzvorrichtungen in Fahrzeugen beschrieben, bei der zur Erkennung der Aufprallrichtung zwei in unterschiedlichen Richtungen ausgerichtete Beschleunigungssensoren vorgesehen sind, so daß in Abhängigkeit der Aufprallrichtung nicht nur die Frontairbags sondern gegebenenfalls auch Seitenairbags ausgelöst werden können.

In gleicher Weise sind bei einer Sicherheitsvorrichtung gemäß der EP 0 693 404 A2 zwei Beschleunigungssensoren vorgesehen, die in ± 45°-Richtung zur Fahrtrichtung angeordnet sind, wodurch ebenfalls eine Seitenkollission oder ein Schrägausfall detektierbar ist.

Weitere Verfahren und Vorrichtungen zur Auslösung passiver Sicherheitseinrichtungen sind beispielsweise der DE-OS 21 23 359, DE 38 16 588 A1, EP 0 517 253 A1, WO 90/09298, WO 93/09008, sowie der DE 44 24 551 A1 zu entnehmen.

Bekannte Auslöseverfahren solcher Sicherheitsvorrichtungen führen die Beschleunigungssignale, die entweder von einem einzigen oder auch von zwei Beschleunigungssensoren erzeugt werden, einer Integration zu, um anschließend den Integrationswert mit einer Crash-Schwelle zu vergleichen, um dann ggf. die passive Sicherheitsvorrichtung auszulösen.

Vor einer Integration der Beschleunigungssignale werden diese in der Regel verstärkt, gefiltert und einem unsymmetrischen Begrenzer zugeführt, wie dies aus der DE 38 16 587 A1 bekannt ist. Von einem derart erzeugten Signal wird mittels einer Differenzschaltung ein Referenzwert subtrahiert und erst anschließend einem Integrator zugeführt. Die weitere Verarbeitung des integrierten Beschleunigungssignales erfolgt in Analogtechnik.

Neben der analogen Verarbeitung von Beschleunigungssignalen ist auch deren digitale Verarbeitung beispielsweise aus der DE 37 17 427 bekannt. Dort werden die Beschleunigungssignale zweier Sensoren nach einer Verstärkung und einer Filterung einer Sample- und Hold-Schaltung zugeführt, deren Ausgangssignale von einem nachgeschalteten A/D-Wandler digitalisiert werden. Diese digitalisierten Sensorsignale werden von einem Mikroprozessor bearbeitet.

Eine solche digitale Verarbeitung ist auch aus der DE 30 01 780 C2 bekannt, wo die Beschleunigungssignale mittels eines 8-Bit-Analog/Digital-Wandlers umgesetzt und von einem 8-Bit-Prozessor verarbeitet werden.

Der Aufwand einer solchen 8-Bit-Verarbeitung ist nicht unerheblich, da dieser ein hoher Speicher- und Rechenaufwand zugrundeliegt.

Schließlich ist auch aus der DE 41 17 811 C2 ein Verfahren zur Auswertung von Sensorsignalen bekannt, die zunächst als Beschleunigungssignale digitalisiert werden. Diese digitalisierten Beschleunigungssignale werden in aufeinanderfolgenden Zeitabschnitten über einen bestimmten Zeitintervall erfaßt und in einem Schieberegister gespeichert. Einem Integrator wird anschließend die Differenz aus dem aktuellen und dem um das bestimmte Zeitintervall zurückliegenden Beschleunigungswert zugeführt um hieraus eine Differenzgeschwindigkeit zu bilden, deren Wert als Auslösekriterium dient. Zur Durchführung der Speicherung und der Differenzbildung ist jedoch ebenfalls eine 8 Bit-Auflösung erforderlich.

Die Aufgabe der vorliegenden Erfindung besteht daher darin, ein Verfahren der eingangs genannten Art anzugeben, das mit einer geringen Bitbreite bei der Verarbeitung der Beschleunigungssignale auskommt und daher zu dessen Realisierung sowohl mit geringem Software- als auch Hardware-Aufwand realisierbar ist.

Diese Aufgabe wird gemäß den kennzeichnenden Merkmalen des Patentanspruches 1 gelöst. Hiernach werden unter anderem die von den Beschleunigungssensoren gelieferten Sensorsignale quantifiziert und anschließend diejenigen Sensorsignale detektiert, die gleichzeitig eine Aufprallrichtung entgegen der Fahrtrichtung des Fahrzeuges anzeigen. Mit der Detektion solcher zeitlich aufeinanderfolgenden Sensorsignalen wird einerseits ein linear ansteigendes Crash-Signal erzeugt und andererseits eine mit zunehmendem Zeitablauf stärker ansteigende, vorzugsweise exponentiell ansteigende Auslöseschwelle, wobei eine Aktivierung der Auslösemittel dann erfolgt, wenn das Crash-Signal diese dynamische Auslöseschwelle erreicht.

Dieses erfindungsgemäße Verfahren führt bei einem Crash zu einer zeitlich schnellen Aktivierung, so daß nahezu kein Zeitverzug gegenüber dem geforderten Auslösezeitpunkt nach dem Beginn des Crashs auftritt.

Das erfindungsgemäße Verfahren erlaubt eine kostengünstige schaltungstechnische Realisierung. Insbesondere bietet sich nach der Quantifizierung eine digitale Verarbeitung der Sensorsignale an, da beispielsweise bei einer Verwendung von zwei Sensoren mit zwei Schwellen zur Quantifizierung maximal 4 Bit nebeneinander verarbeitet werden müssen. Diese geringe Bitbreite wird durch die starke Eingangsquantifizierung möglich, so daß die dynamische Auslöseschwelle ebenfalls digital erzeugt werden kann. Daneben kann die Realisierung der Verfahrensschritte nach der Quantifizierung auch durch einen vorhandenen Prozessor oder einen zusätzlichen Kleinst-Prozessor (4- Bit) vorgenommen werden.

Die Erzeugung der dynamischen Auslöseschwelle wird bei einem bevorzugten Ausführungsbeispiel additiv aus einem Konstantwert und einem mit dem Zeittakt des Zeitrasters ansteigenden Zählwert gebildet. In vorteilhafter Weise kann die Auslöseschwelle derart eingestellt werden, daß sie zu Beginn klein ist und dann expontentiell mit dem vorgegebenen Zeitraster ansteigt. Damit wird erreicht, daß unmittelbar zu Beginn eines Crashs eine hohe Empfindlichkeit für die Aktivierung der Auslösemittel der Sicherheitsvorrichtungen gewährleistet ist.

Um ein optimales Auslöseverhalten sicherzustellen, kann der Zeittakt des Zeitrasters für die Einstellung des exponentiellen Verlaufs der Auslöseschwelle sowie der Konstantwert der Auslöseschwelle in Abhängigkeit der Fahrzeugsignatur ausgewählt und bestimmt werden.

Bei einer weiteren vorteilhaften Ausführungsform der Erfindung werden im Anschluß an die Quantifizierung der Sensorsignale diese während eines Zeittaktes zwischengespeichert, um so die nachfolgende Bearbeitung dieser Signale definierte Zustände sicherzustellen.

Um die Klassifizierungseigenschaft des erfindungsgemäßen Verfahrens zu verbessern, ist es gemäß einer weiteren vorteilhaften Weiterbildung der Erfindung vorgesehen, die quantifizierten Sensorsignale einer Bewertungsfunktion zur Erzeugung von Sensorsignalkennungswerten zu unterwerfen. Anschließend werden diese Sensorsignalkennungswerte differenziert und deren Beträge aufintegriert. Diese aufintegrierten Beträge werden mit einer Auslöseschwelle verglichen und gegebenenfalls die Auslösemittel der Sicherheitsvorrichtungen ausgelöst.

Vorzugsweise kann als Bewertungsfunktion eine Addition der quantifizierten Sensorsignale durchgeführt werden. Anstelle einer solchen Addition kann als Bewertung auch eine Bewertungs-Matrix vorgesehen werden, indem den mit jedem Zeittakt erzeugten quantifizierten Sensorsignalen ein Matrixwert zugeordnet wird.

Besonders vorteilhaft kann die Quantifizierung der Sensorsignale mit einer positiven und einer negativen Schwelle durchgeführt werden, weshalb dieses zusätzliche Verfahren mit einer geringen Bitbreite durchführbar ist.

Eine Vorrichtung zur Durchführung des erfindungsgemäßen Verfahrens ist im Anspruch 10 angegeben und enthält zwei Sensoren, die im Fahrzeug derart angeordnet sind, daß deren Empfindlichkeitsachsen mit einem Winkel von + 45° bzw. - 45° gegen die Längsachse des Fahrzeuges in Fahrtrichtung gerichtet sind. Zur Quantifizierung der von solchen Sensoren erzeugten Sensorsignale werden jeweils zwei Quantifizierungskomparatoren zugeordnet, die jeweils einen negativen bzw. positiven Schwellwert detektieren. Ferner wird zur Detektion solcher Beschleunigungssignale, die eine entgegen der Fahrtrichtung gerichteten Aufprallrichtung anzeugen, ein Komparator eingesetzt, der dann ein Ausgangssignal erzeugt, wenn die quantifizierten Sensorsignale eines Zeittaktes gleichzeitig positive Vorzeichen aufweisen.

Bei einer vorteilhaften Weiterbildung einer solchen Vorrichtung wird das Crash-Signal mit einer dem Komparator nachgeschalteten Zählerstufe realisiert, so daß bei aufeinanderfolgenden Ausgangssignalen des Komparators diese Zählerstufe hochzählt.

Die ansteigende Auslöseschwelle wird dagegen mit einer Funktionseinheit realisiert, die sowohl als Schieberegister als auch als Zähler betrieben wird. Dieser Funktionseinheit wird eine Addierstufe nachgeschaltet, in der ein Konstantwert und ein zeitabhängiger Zählwert als dynamische Auslöseschwelle aufaddiert wird. Den dazugehörigen Schiebe- bzw. Zähltakt erzeugt eine Teilerstufe.

Im folgenden soll das erfindungsgemäße Verfahren anhand von Ausführungsbeispielen im Zusammenhang mit den Zeichnungen dargestellt und erläutert werden. Es zeigen:
Fig. 1 Ein Blockschaltbild einer Airbagsteuereinheit als Ausführungsbeispiel des erfindungsgemäßen Verfahren,
Fig. 2: eine Schaltungsanordnung der Auswerteeinheit 1 gemäß Fig. 1,
Fig. 3: eine Darstellung der in einem Fahrzeug angeordneten Sensoren,
Fig. 4: eine mittels eines Prozessors aufgebaute Auswerteeinheit 1 gemäß Fig. 1,
Fig.5: ein Programmablaufplan zur Durchführung des erfindungsgemäßen Verfahrens mittels des Prozessors gemäß Fig. 4,
Fig. 6: ein Signal-Diagramm zur Erläuterung des erfindungsgemäßen Verfahrens,
Fig. 7: ein Blockschaltbild eines weiteren Ausführungsbeispieles zur Durchführung des erfindungsgemäßen Verfahrens,
Fig. 8: ein Programmablaufplan zur softwaremäßigen Realisierung der Funktion der Schaltungsanordnung gemäß Fig. 7,
Fig. 9: eine Teildarstellung der Schaltungsanordnung nach Fig. 7 mit einer Bewertungs-Matrix anstelle der Addierstufe 17, und
Fig. 10a und 10b Ausführungsbeispiele einer als Bewertungsfunktion dienenden Bewertungs-Matrix.

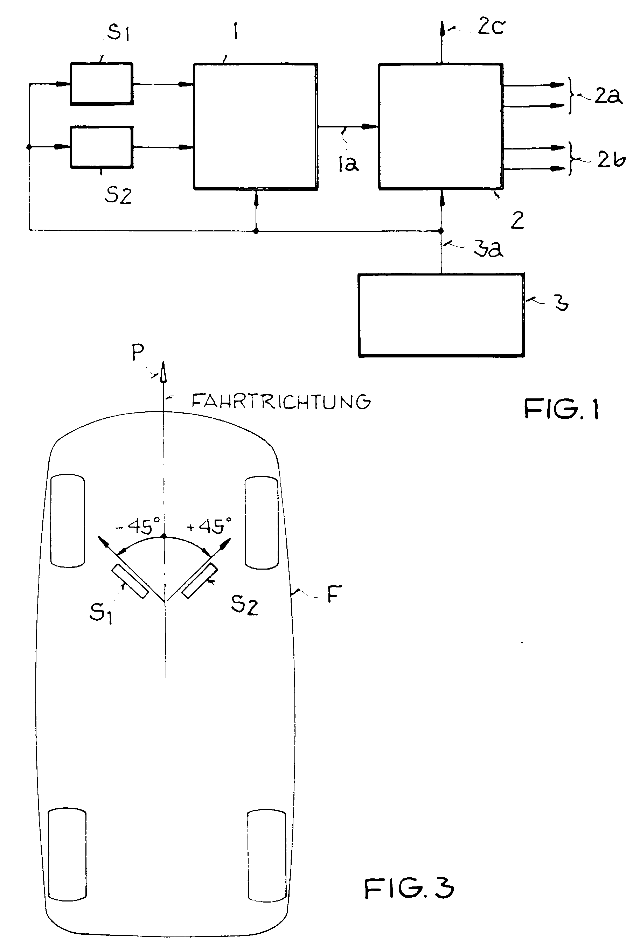

Figur 1 zeigt eine Airbagsteuereinheit für Kraftfahrzeuge mit den Funktionsblöcken Auswerteeinheit 1, Leistungsteil 2 und einem Diagnoserechner 3. Die von zwei Beschleunigungssensoren S1 und S2 gelieferten Beschleunigungssignale werden zur Auswertung der Auswerteeinheit 1 zugeführt, die anhand dieser Sensorsignale auf den Fahrzeugzustand schließt. Wenn diese Beschleunigungssignale auf einen drohenden Zusammenstoß des Fahrzeuges hindeuten, werden über eine Leitung 1a Zündbefehle an die Leistungseinheit 2 weitergegeben. Dieser Leistungsteil generiert bei Vorliegen von Zündbefehlen Zündsignale für die Auslösemittel von Airbags 2b, Gurtstraffer 2a und Gurtschloßschalter 2c. Der Diagnoserechner 3 überwacht und überprüft die Funktionstüchtigkeit des gesamten Systems.

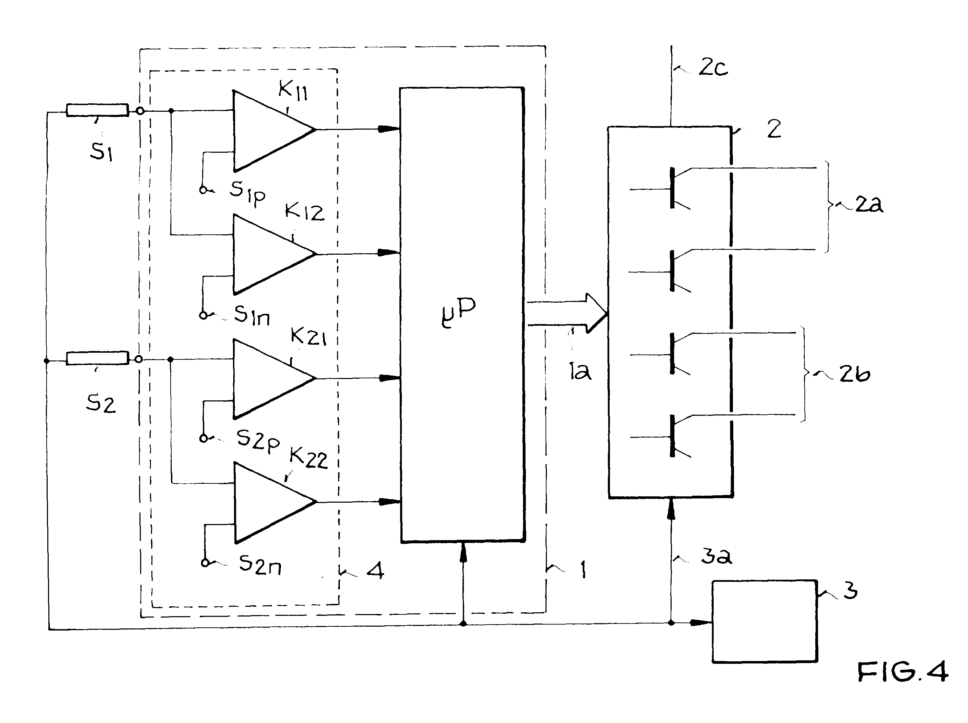

Die Sensoren S1 und S2 und gemäß Figur 3 sind um 90° gegeneinander versetzt und jeweils um 45° gegen die Fahrtrichtung P im Fahrzeug F angeordnet, so daß die Sensorsignale auch Informationen bzgl. der Aufprallrichtung liefern.

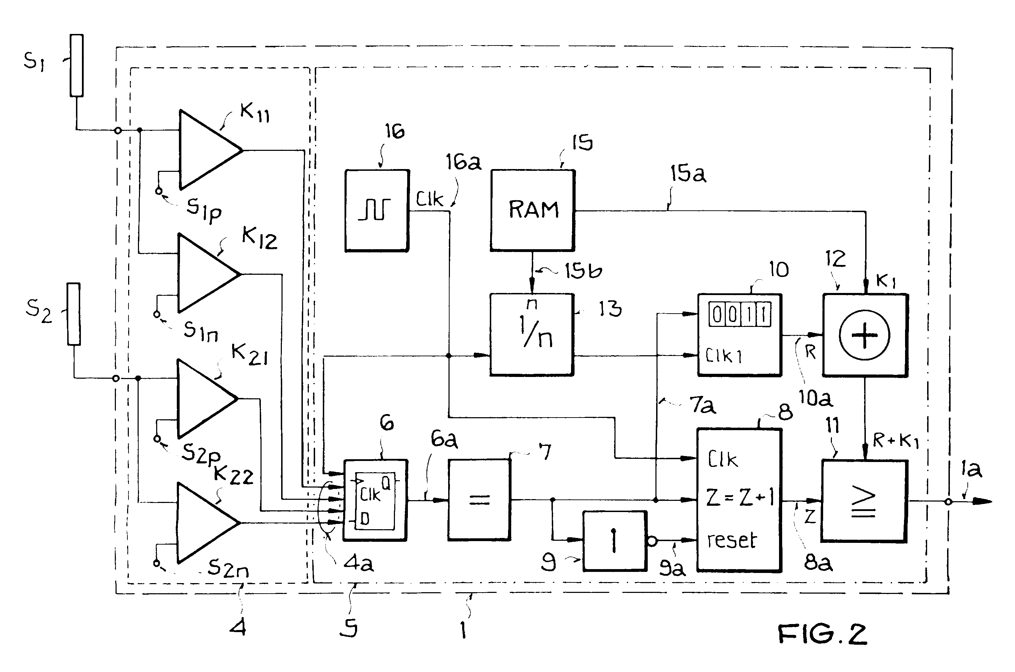

Eine hardwaremäßige Realisierung der Auswerteeinheit 1 gemäß Figur 1 ist in Figur 2 dargestellt und besteht aus einer Quantifizierungseinheit 4 und einer Auswerteschaltung 5.

Zur Quantifizierung der Sensorsignale wird das Beschleunigungssignal des Sensors S1 jeweils zwei Komparatoren K11 und K12 und die Sensorsignale des Sensors S2 jeweils zwei weiteren Komparatoren K21 und K22 zugeführt. Als Schwellen zur Quantifizierung dienen jeweils eine positive und negative Schwelle s1n, s1p bzw. s2n, s2p:
Sensor S1: s1p und s1n mit s1p > s1n,
Sensor S2: s2p und s2n mit s2p > s2n.

Der Ausgang der Quantifizierungseinheit 4 besitzt somit 4 Leitungen 4a, die auf den Eingang eines mit D-Flip-Flops ausgebildeten Zwischenspeichers 6 gelegt werden.

Auf jeder der Leitungen stehen für jeden der Sensoren S1 bzw. S2 die Informationen keine Beschleunigung", positive Beschleunigung" oder negative Beschleunigung" zur Verfügung. Somit werden auf 4 Leitungen lediglich 6 unterschiedliche Information mit Hilfe des Zwischenspeichers 6 in von einem Taktsignal clk vorgegebenen konstanten Zeitintervallen zwischengespeichert. Hierzu wird das von einem Taktgenerator 16 erzeugte Taktsignal clk über eine Leitung 16a diesem Zwischenspeicher 6 zugeführt, so daß die Sensorwerte bis zum nächsten Clock-lmpuls an dessen Ausgang anstehen und damit über eine Leitung 6a gleichzeitig am Eingang eines nachgeschalteten Komparators 7 zur Verfügung stehen.

Mit diesem Komparator 7 wird überprüft, ob die in jedem Zeittakt vorliegenden quantifizierten Sensorwerte der Sensoren S1 und S2 positiv sind (d.h., eine Aufprallrichtung entgegen der Fahrtrichtung des Fahrzeuges anzeigen). Ist dies der Fall, wird über eine Leitung 7a ein Startimpuls sowohl einem Zähler 8 als auch einer Funktionseinheit 10 zugeführt, die entweder als Schieberegister oder als Zähler betrieben werden kann. Gleichzeitig erhält ein NAND-Gatter 9 diesen Startimpuls, das bei entsprechendem Eingangssignal über eine Leitung 9a ein Reset-Signal für den Zähler 8 erzeugt.

In bezug auf diesen Zähler 8 hat ein solches Start-Signal die Wirkung, daß dessen Zählerstand Z um 1" erhöht wird. Im anderen Fall, wenn also die beiden Sensorwerte nicht positiv sind, wird er auf 0" zurückgesetzt. Damit zählt dieser Zähler 8 diejenigen Sensorwertpaare, die nacheinander eine Beschleunigung in positiver Richtung anzeigen, also in den ersten Quadranten fallen.

Der Zählerstand Z dieses Zählers 8 dient nun als Crash-Signal und wird über eine Leitung 8a einem weiteren Komparator 11 zugeführt, der einen Vergleich mit der dynamischen Auslöseschwelle (R + K1) durchführt. Wird diese Auslöseschwelle (R + K1) von dem Crash-Signal Z überschritten, erfolgt eine Aktivierung der Auslösemittel der Sicherheitsvorrichtungen.

Diese verschiebbare Auslöseschwelle (R + K1) wird in einer Addierstufe 12 erzeugt, indem zu einem Startwert K1, der über eine Leitung 15a eines RAM-Registers 15 eingegeben wird, ein mit dem Zeittakt zunehmender Zählwert R, der über eine Leitung 10a von der Funktionseinheit 10 stammt, addiert wird.

Um die Auslöseschwelle (R + K1) exponentiell anwachsen zu lassen, muß der von der Funktionseinheit 10 erzeugte Zählwert R im Zeittakt exponentiell anwachsen. Dies wird zusammen mit einer Teilerstufe 13 realisiert, die über eine Leitung 15b einen Teilerfaktor n aus dem RAM-Register 15 und gleichzeitig auch das Taktsignal clk erhält. Hieraus sind ein Taktsignal clk1 mit im Vergleich zum Taktsignal clk niederen Taktfrequenz erzeugt. Mit dem Teilerfaktor n läßt sich der Anstieg der exponentiellen Auslöseschwelle variieren und so der Fahrzeugsignatur anpassen.

Im folgenden soll nun die Aufgabe der Funktionseinheit 10 erläutert werden. Es wird zunächst davon ausgegangen, daß deren Registerinhalt "0" ist. Ein von dem Komparator 7 erzeugter Startimpuls bewirkt nun das Einschreiben einer "1" an der Bit-niedrigsten Stelle, die sich von diesem Zeitpunkt an mit jedem von der Teilerstufe 13 erzeugten Taktsignal clk1 nach links schiebt, wobei gleichzeitig eine "1" nachgeschoben wird. Dies geschieht so lange, bis die höchstwertigste Bitstelle gesetzt ist. Zu diesem Zeitpunkt wird von der Funktion "Schieberegister" auf die Funktion "Abwärtszähler" automatisch umgeschaltet. Nun kann der Registerinhalt R gegebenenfalls bis auf "0" heruntergezählt werden. Sobald das höchstwertigste Bit während des Abwärtszählens erlischt (d.h., die höchstwertigste Bitstelle eine "0" aufweist), wird ein von dem Komparator 7 erzeugter Impuls wieder berücksichtigt, so daß ein Umschalten zur Funktion "Schieberegister" erneut erfolgen kann.

In der Funktion "Schieberegister" werden in den ersten Zeittakten zunächst kleine Werte R = "1" und R = "11" ausgegeben, während mit fortschreitendem Zeittakt die Werte R schnell sehr groß werden: R = "111" und R = "1111".
Das Abwärtszählen erfolgt dagegen bitweise und somit wesentlich langsamer. Dies hat zur Folge, daß eine bestimmte Zeitdauer vergehen muß, bis das Verfahren (also die Umschaltung auf die Funktion "Schieberegister") erneut aktiviert werden kann.

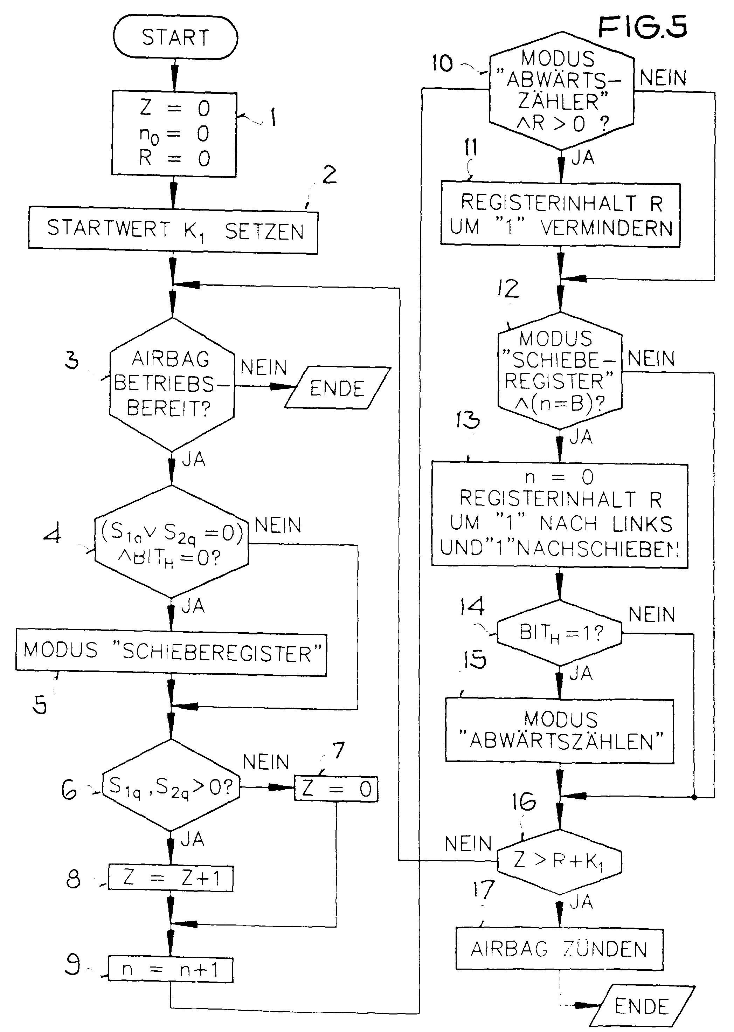

Statt einer hardwaremäßigen Realisierung des erfindungsgemäßen Verfahrens kann die Auswertung der Sensorsignale auch mittels eines einfachen 4-Bit-Prozessors durchgeführt werden. Somit besteht die Auswerteeinheit 1 gemäß Figur 4 aus einer Quantifizierungseinheit 4 und einem Mikroprozessor µP. Die anderen Funktionseinheiten entsprechen denjenigen aus Figur 1. Nach dem Start des Programms gemäß Figur 5 wird in Schritt 1 eine Zählerfunktion Z, eine Teilerfunktion n und ein Registerinhalt R auf "0" gesetzt. Die Bedeutung der Funktionen Z und R wurde schon im Zusammenhang mit der Erläuterung der Figur 2 dargestellt. In Schritt 2 wird der Startwert K1 gesetzt, dessen Bedeutung ebenfalls im Zusammenhang mit Figur 2 erläutert wurde.

Falls die Sicherheitsvorrichtungen betriebsbereit sind (vgl. Schritt 3) wird anschließend in einem Schritt 4 überprüft, ob eines der Sensorsignale S1 oder S2 "0" sind und die höchstwertigste Bitstelle Bit_{H} besetzt ist. Falls dies zutrifft, wird der Betriebsmodus "Schieberegister" gemäß Schritt 5 aktiviert. Im anderen Fall wird dieser Schritt 5 übersprungen.

Falls gemäß Schritt 6 beide quantifizierten Sensorsignale S_{1q} und S_{2q} positiv sind, wird anschließend die Zählerfunktion Z um 1" erhöht. Trifft dies nicht zu, wird der Zähler auf "0" gesetzt und lediglich Schritt 9 durchgeführt. Die Erhöhung des Teilers n auf n + 1 wird so oft durchgeführt, bis eine obere Schranke (Schritt 12) erreicht ist. Beim Erreichen der Schranke erfolgt eine Schiebeoperation bei dem Register R und ein Rücksetzen des Teilers n auf Null (Schritt 13).

In Schritt 10 wird überprüft, ob im Betriebsmodus "Abwärtszähler" ein Registerinhalt (R > 0) vorhanden ist. Falls dies vorliegt wird der Registerinhalt R um "1" vermindert, andernfalls wird dieser Schritt 11 übersprungen.

Falls jedoch der Betriebsmodus "Schieberegister" gemäß Schritt 12 vorliegt und der Zähler n eine Schwelle B erreicht hat, wird der Teiler n auf "0" gesetzt und der Registerinhalt R um "1" erhöht und gleichzeitig eine "1" nachgeschoben (vgl. Schritt 13). Die Schwelle B wird so gewählt, daß der Wert im Register R sich zeitlich in angepaßter Weise zum Fahrzeugtyp exponentiell verändert. Wenn die höchstwertigste Bitstelle besetzt ist (Bit_{H} = 1), wird gemäß Schritt 15 der Betriebsmodus "Abwärtszähler" eingestellt, andernfalls Schritt 15 übersprungen um den nächsten Schritt 16 durchzuführen.

Liegt dagegen der Betriebsmodus "Schieberegister" (vgl. Schritt 12) nicht vor oder ist n <B, dann wird mit Schritt 16 die Summe aus Registerinhalt R und Startwert K1 gebildet, die nun die Auslöseschwelle darstellt, und mit dem Zählerstand Z verglichen. Wird diese Auslöseschwelle überschritten, erfolgt eine Auslösung der Sicherheitsvorrichtungen (vgl. Schritt 17), andernfalls erfolgt ein Rücksprung nach Schritt 3.

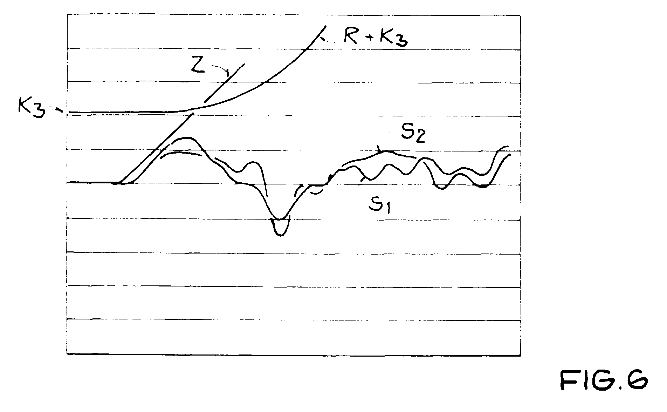

In dem Diagramm nach Figur 6 wird die Wirkungsweise dieses Auswerteverfahrens gezeigt. Hierbei geben die Kurven S1 und S2 den Verlauf der Beschleunigungssignale der Sensoren S1 und S2 während eines Zusammenstoßes an. Mit Beginn des Zusammenstoßes zeigen beide Sensorsignale gleichzeitig positive Werte, so daß das Crash-Signal Z linear ansteigt und gleichzeitig die Auslöseschwelle (R + K1) erzeugt wird. Im Schnittpunkt dieser beiden Kurven Z und (R + K1) erfolgt die Auslösung der Sicherheitsvorrichtungen.

Mit diesen erfindungsgemäßen Verfahren wird ein sehr gutes zeitliches Verhalten, d. h. eine sehr schnelle Zündung im Crash-Fall sichergestellt.

Um das Klassifizierungsverhalten zu verbessern, können die quantifizierten Sensorsignale S_{1q} und S_{2q} einer Bewertung zur Erzeugung von Sensorsignalkennungswerten unterworfen werden, die zur Ableitung eines Crash-Signals dienen.

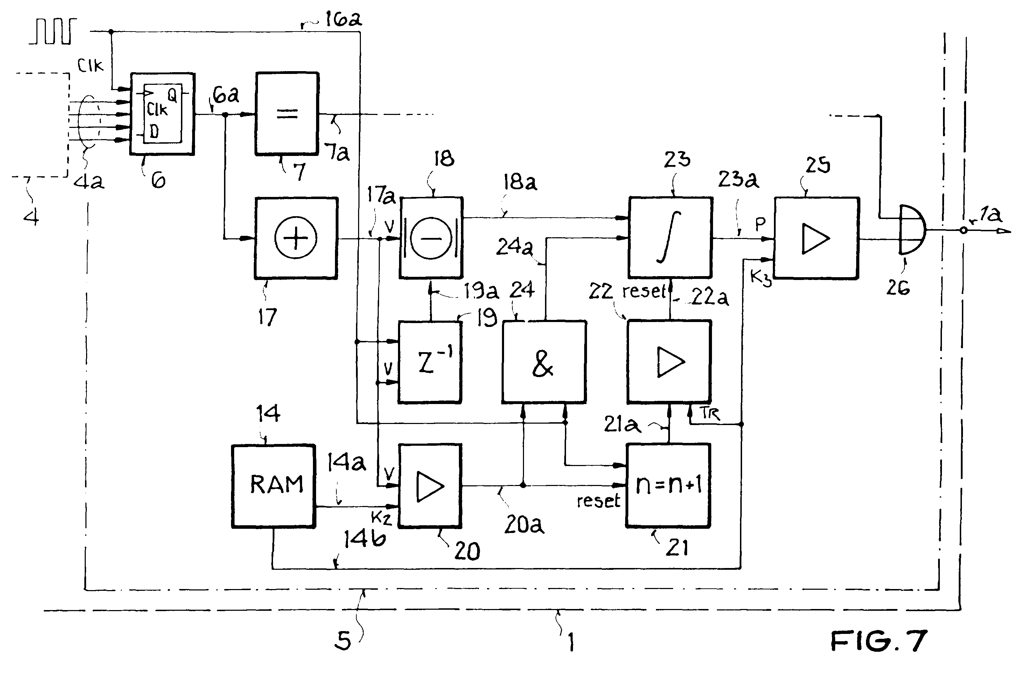

Eine hardwaremäßige Realisierung einer solchen Bewertung zeigt Figur 7, wobei lediglich ein Ausschnitt der Schaltungsanordnung nach Figur 2 dargestellt ist.

In dieser Schaltungsanordnung werden die am Ausgang des Zwischenspeichers 6 stehenden quantifizierten Sensorsignale S_{1q} und S_{2q} nicht nur dem Komparator 7 sondern über eine Leitung 6a auch einer Addierstufe 17 zugeführt. In dieser Addierstufe 17 werden die quantifizierten Sensorsignale aufaddiert, so daß deren Summe mit jedem Zeittakt als 3-Bit-Vektor an dessen Ausgang zur Verfügung stehen, die dann über eine Leitung 17a nachgeschalteten Verarbeitungseinheiten zugeführt wird.

Diese Addition stellt eine Bewertungsfunktion dar, die auf die quantifizierten Sensorsignale angewendet wird, um hieraus mit jedem Zeittakt einen Sensorsignalkennungswert, also die Summe zu erzeugen. Beispielhaft soll im folgenden die Wahrheitstabelle einer solchen Bewertungsfunktion für die zwei Sensoren S1 und S2 gezeigt werden, wobei deren Empfindlichtkeitsachsen gemäß Figur 3 angeordnet sind. Somit kann der Sensor S1 in Fahrtrichtung gesehen als linker Sensor und der Sensor S2 als rechter Sensor bezeichnet werden.

| | linker Sensor S1 | | rechter Sensor S2 | | Ausgang Addierstufe 17 | |
|---|---|---|---|---|---|---|
| | s1p | s1n | s2p | s2n | Vektor V | dez |
| 1 | 0 | 0 | 0 | 0 | (0, 0, 0) | 0 |
| 2 | 1 | 0 | 0 | 0 | (0, 0, 1) | + 1 |
| 3 | 0 | 1 | 0 | 0 | (1, 0, 1) | -1 |
| 4 | 0 | 0 | 1 | 0 | (0, 0, 1) | +1 |
| 5 | 1 | 0 | 1 | 0 | (0, 1, 0) | +2 |
| 6 | 0 | 1 | 1 | 0 | (0, 0, 0) | 0 |
| 7 | 0 | 0 | 0 | 1 | (1, 0, 1) | -1 |
| 8 | 1 | 0 | 0 | 1 | (0, 0, 0) | 0 |
| 9 | 0 | 1 | 0 | 1 | (1, 1, 0) | -2 |

In dieser Wahrheitstabelle sind in den Spalten "linker Sensor" und "rechter Sensor" die von der Quantifiziereinheit 4 erzeugten Werte aufgeführt. Dabei zeigt der Wert "0", daß der entsprechende Schwellwert nicht erreicht wurde, während der Wert "1" das Erreichen der entsprechenden Schwelle anzeigt. So bedeutet "0", daß weder eine positive noch eine negative Beschleunigung vorliegt, während eine "1" eine positive bzw. negative Beschleunigung anzeigt.

In der sich an die genannten Spalten anschließende Spalte "Ausgang Addierstufe 17" sind die Ergebnisse der Addition als 3-Bit-Vektor V eingetragen. Schließlich ist die letzte Spalte für den entsprechenden Dezimalwert vorgesehen.

Wie aus dieser Wahrheitstabelle zu ersehen ist, wird die Bewertungsfunktion so definiert, daß die in den Sensorsignalen enthaltenen Richtungsinformationen im wesentlich verloren gehen. So werden die bei einem von links vorne oder rechts vorne erfolgten Zusammenstoß des Fahrzeuges erhaltenen Sensorsignale mit (+1) bewertet (siehe Zeilen 2 und 4), während bei einem entsprechenden Zusammenstoß von links hinten oder rechts hinten die Bewertung (-1) lautet (siehe Zeilen 3 und 7).

Gemäß den Zeilen 5 und 9 wird ein Zusammenstoß in Fahrtrichtung bzw. entgegen der Fahrtrichtung mit (+2 bzw. -2) bewertet.

In allen anderen Fällen, wenn also die vorgegebenen Schwellen nicht erreicht werden, bei einem Zusammenstoß von rechts bzw. links (vgl. Zeile 6 bzw. Zeile 8) wird ein 0-Vektor von der Addierstufe 17 ausgegeben.

Diese von der Addierstufe 17 ausgegebenen Vektoren V werden über die Leitung 17a einem Komparator 20, einem Register 19 und einer Funktionseinheit 18 zugeführt, die aus dem aktuell zugeführten Vektor V und einem im vorangegangenen Zeittakt erzeugten Vektor V₀ die Differenz und deren Betrag bildet. Dieser Vektor V₀ ist in dem Register 19 abgespeichert und wird im Zeittakt über eine Leitung 19a der Funktionseinheit 18 zugeführt.

Die in der Funktionseinheit 18 durchgeführte Operation entspricht einer Differenzierung mit anschließender Betragsbildung der Summe der quantifizierten Sensorwerte, womit der Betrag der Steigung von aufeinanderfolgenden Summenwerten auf der Leitung 18a, die zu einem Integrator 23 führt, anstehen.

In diesem Integrator 23 werden die in aufeinanderfolgenden Zeittakten gebildeten Steigungswerte aufsummiert und bildet ein Crash-Signal P, das in einem nachgeschalteten Komparator 25 mit einer Auslöse-Schwelle K3 verglichen wird. Wenn diese Auslöse-Schwelle K3 von dem Crash-Signal P erreicht wird, erfolgt über ein nachgeschaltetes ODER-Glied 26 eine Auslösung der Sicherheitsvorrichtungen. Dabei wird dem einen Eingang des ODER-Gliedes 26 das Crash-Signal P und dem anderen Eingang das von dem Komparator 11 nach Figur 2 erzeugte Crash-Signal zugeführt.

Da in den Integrator 23 ausschließlich positive Werte hineinfließen, wäre der Integratorinhalt immer monoton steigend, was zu unerwünschten Ergebnissen führen würde. Daher muß dieser Integrator 23 zu bestimmten Zeitpunkten zurückgesetzt werden, was mittels dem schon erwähnten Komparator 20, einem Zähler 21 und einem weiteren Komparator 22 durchgeführt wird.

Zunächst soll dieser Integrator 23 immer dann zurückgesetzt werden, wenn über einen bestimmten Zeitraum keine Auslösung erfolgt. Hierzu wird der von dem Zähler 21 erzeugte Zählwert mit einer von einem Register-RAM 14 über eine Leitung 14b bereitgestellten Zeitkonstante T_{R} mittels des Komparators 22 verglichen. Übersteigt der über eine Leitung 21a dem Komparator 12 zugeführte Zählwert diese Zeitkonstante T_{R,} wird dem Integrator 23 über eine Leitung 22a ein Reset-Impuls zugeführt.

Der Reset-Eingang des Zählers 21 ist mit dem Ausgang des Komparators 20 verbunden, der über eine Leitung 20a seine Ausgangssignale auch einem UND-Gatter 24 zuführt, das gleichzeitig auch das Taktsignal clk erhält. Das Taktsignal clk wird also nur dann für den Integrator 23 freigegeben, wenn ein Ausgangssignal des Komparators 20 anliegt.

Ein Ausgangssignal wird von dem Komparator 20 dann erzeugt, wenn ein von der Addierstufe 17 erzeugter Vektor eine Zählschwelle K2 überschreitet. Diese Zählschwelle K2 wird über eine Leitung 14a von dem Register-RAM 14 bereitgestellt.

Beispielhaft soll im folgenden die Wahrheitstafel eines solchen Komparators 20 gezeigt werden.

| Vektor V | Ausgang Komparator 20 |
|---|---|
| (0, 0, 0) | 0 |
| (0, 0, 1) | 1 |
| (0, 1, 0) | 1 |
| (1, 0, 1) | 0 |
| (1, 1, 0) | 0 |

Hieraus ist zu ersehen, daß der Komparator 20 lediglich bei den Vektoren (0, 0, 1) und (0, 1, 0) ein Ausgangssignal erzeugt, also nur dann wenn ein Zusammenstoß von links bzw. rechts vorne oder in Fahrtrichtung von vorne zu erwarten ist. In einem solchen Fall wird der Zähler 21 auf "0" gesetzt und bewirkt ebenfalls ein Zurücksetzen des Integrators 23, falls innerhalb der Zeitkonstanten T_{R} das von dem Integrator 23 erzeugte Crash-Signal P nicht die Auslöse-Schwelle K3 erreicht. Diese Auslöse-Schwelle K3 ist ebenfalls in dem Register-RAM 14 abgelegt.

In allen anderen Fällen von Zusammenstößen wird kein Ausgangssignal erzeugt, so daß die mit diesen Vektoren V bestimmten Steigungswerte in dem Integrator 23 nicht aufintegriert werden, da dann das Taktsignal clk den Integrator 23 nicht erreicht.

Die beiden Konstanten K2 und T_{R} müssen aufeinander abgestimmt sein und werden anhand von für jeden Fahrzeugtyp vorliegenden Crash-Daten bestimmt. Dabei müssen diese Konstanten so gewählt werden, daß eine Auslösung erfolgen muß, wenn dies gefordert ist bzw. keine Fehlauslösungen auftreten dürfen. Das mit der Schaltungsanordnung nach Figur 7 durchgeführte Verfahren erfüllt mit entsprechend gewählten Konstanten K2 und T_{R} diese Bedingungen, klassifiziert also alle Crashs zu 100 %, wobei möglicherweise auftretende Zündverzugszeiten aufgrund der Eigenschaften der parallelgeschalteten Schaltungsanordnung nach Figur 2 vernachlässigbar sind. Da der Auslösezeitpunkt der Sicherheitsvorrichtungen innerhalb einer bestimmten Zeitdauer nach der Detektion eines gefährlichen Crashs durch die Sensoren erfolgen muß, gibt die Zündverzugszeit diejenige Zeitspanne an, die über diese bestimmte Zeitdauer hinausgeht.

Statt einer hardwaremäßigen Realisierung kann diese zusätzliche Auswertung der Sensorsignale auch mittels eines einfachen 4-Bit-Prozessors durchgeführt werden.

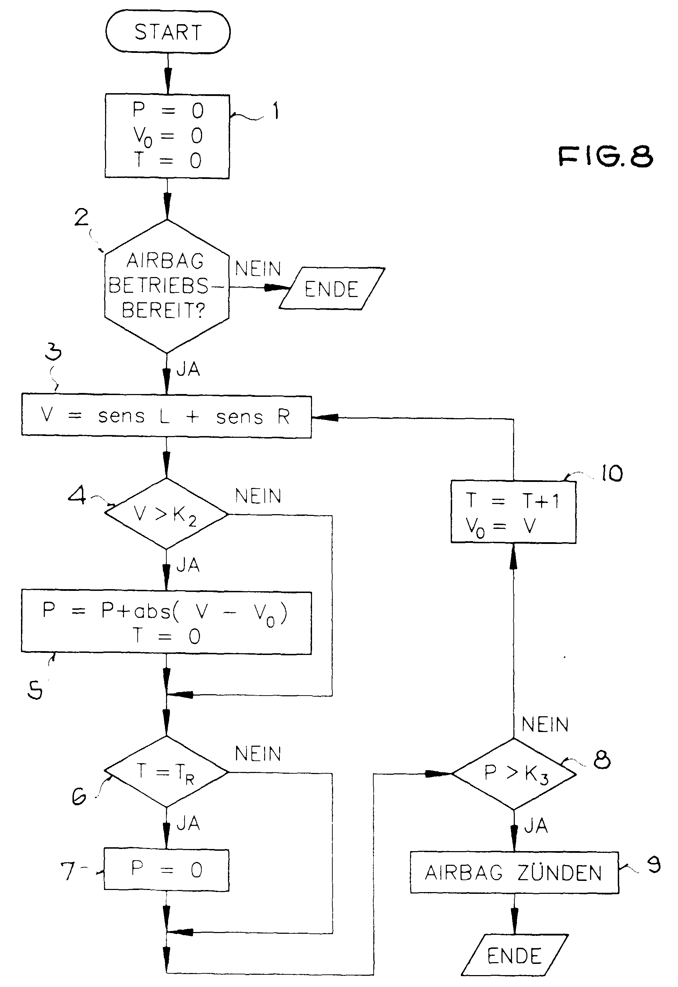

Eine für einen solchen Mikroprozessor µP vorgesehene Softwarerealisierung zeigt der Programmablaufplan gemäß Figur 8. Nach dem Start des Programms erfolgt in Schritt 1 die Initialisierung der Programmvariablen P, V₀ und T. Dabei stellt P den Wert der aufintegrierten Werte der Beträge der Steigungen dar, V₀ ist der zu einem Vektor V gehörige Vektor aus einem vorangehenden Zeittakt und T gibt den Zeittakt an.

Wenn gemäß Schritt 2 feststeht, daß der Airbag betriebsbereit ist, wird die Summe aus den quantifizierten Sensorsignalen sens L (des linken Sensors) und sens R (des rechten Sensors) als Vektor V gebildet. Anschließend wird in Schritt 4 dieser Vektor V mit der Zählschwelle K2, deren Bedeutung im Zusammenhang mit Figur 7 erläutert wurde, verglichen. Übersteigt der Vektor V diese Konstante K2 wird der Absolutbetrag der Differenz aus diesem Vektor V mit dem im vorhergehenden Zeittakt gebildeten Vektor V₀ gebildet und gemäß der angegebenen Formel aufintegriert, das heißt zum vorgehenden Integratorwert P hinzuaddiert. Gleichzeitig wird auch der Zeittakt T auf "0" gestellt. im anderen Fall wird dieser Schritt 5 übersprungen und der Zeittakt in Schritt 6 mit der Zeitkonstante T_{R} verglichen, deren Bedeutung ebenfalls schon im Zusammenhang mit der Figur 7 erläutert wurde. Erreicht der Zeittakt T diese Schwelle wird anschließend in Schritt 7 der Integratorwert P zurückgestellt. Im anderen Fall wird dieser Schritt 7 übersprungen.

Falls der Zeittakt diese Zeitkonstante T_{R} nicht erreicht hat, wird in Schritt 8 der Integratorwert P mit einer Auslöse-Schwelle K3 verglichen und ggf. die Sicherheitsvorrichtungen im Fahrzeug ausgelöst (vgl. Schritt 9). Falls die Auslöse-Schwelle K3 noch nicht erreicht ist, wird der Zeittakt T auf T+1 gestellt und der aktuelle Vektor V wird zum Vektor V₀ (vgl. Schritt 10), um anschließend wieder mit Schritt 3 zu beginnen.

Das anhand der Figuren 7 und 8 erläuterte Bewertungsverfahren weist den Nachteil auf, daß die von den Sensoren S1 und S2 gelieferten Richtungsinformationen verlorengeht.

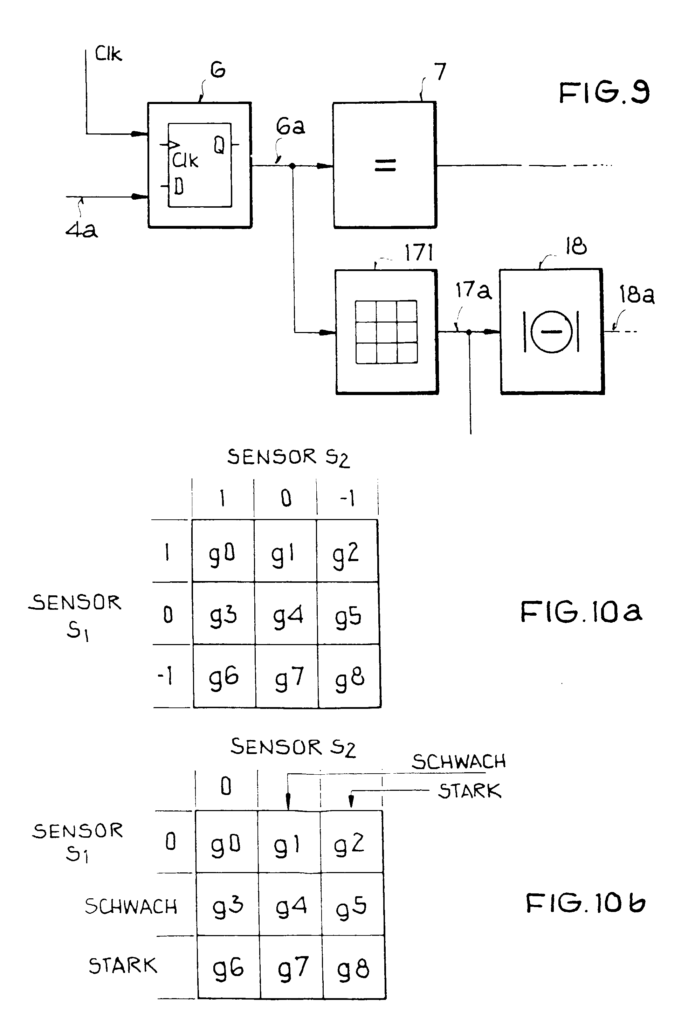

Eine Auswertung der Richtungsinformation läßt sich anstelle der Bewertungsfunktion "Addition" mit einer Bewertungs-Matrix gemäß Figur 9 realisieren, wobei dort lediglich ein Ausschnitt der Schaltungsanordnung nach Figur 7 dargestellt ist. In dieser Figur 9 ist anstelle der aus Figur 7 bekannten Addierstufe 17 eine Parameter-Matrix als RAM-Matrix 171 zwischen dem Zwischenspeicher 6 und der Funktionseinheit 18 geschaltet, deren Funktionen im Zusammenhang mit Figur 7 erläutert wurden. Eine zugehörige Bewertungs-Matrix zeigen jeweils die Figuren 10a und 10b.

Gemäß dem Ausführungsbeispiel nach Figur 10a werden den quantifizierten Sensorwerten der Sensoren S1 und S2 jeweils ein Parameter gi (i = 0 ... 8) zugeordnet. Dabei stellen die quantifizierten Sensorwerte 0, 1 und -1 die Information "keine Beschleunigung", "positive Beschleunigung" bzw. "negative Beschleunigung" dar. Somit stehen am Ausgang der RAM-Matrix 171 die gi-Werte als 3-Bit-Vektoren V, die in entsprechender Weise wie die Vektoren V gemäß Figur 7 weiterverarbeitet werden. Dabei hat sich gezeigt, daß eine Genauigkeit von 3 Bit eines gi-Wertes ausreichend ist, so daß jeder einzelne Wert zwischen -3 und 3 liegen kann. Die optimale Belegung der RAM-Matrix 171 hängt von der jeweiligen Fahrzeugsignatur ab und muß auf das jeweilige Fahrzeug mit Hilfe von Crash-Daten abgestimmt werden. Neben der 100 %-Klassifizierung wird mit einer solchen Auswertung der Richtungsinformation auch das zeitliche Verhalten in Bezug auf die Aktivierung im Crashfall verbessert.

Eine weitere Verbesserung des Zeitverhaltens wird mit der Bewertungsmatrix nach Figur 10b erzielt, wo die Quantifizierung der Sensorsignale nicht mit einer positiven und negativen Schwelle Sn und Sp erfolgt, sondern wo beide Schaltschwellen positiv sind und mit einer hohen und niedrigen Schwelle quantifiziert wird, also eine starke oder schwache Beschleunigung detektierbar ist.

Eine softwaremäßige Realisierung ist auch mit einer solchen Bewertungs-Matrix als Bewertungsfunktion möglich und entspricht im wesentlichen dem Programmablaufplan gemäß Figur 8 mit dem Unterschied, daß der Vektor nicht als Addition aus den quantifizierten Sensorwerten gebildet wird, sondern aus der Bewertungs-Matrix zu entnehmen ist.

Das mit den anhand den Figuren 7, 8 und 9 erläuterte Bewertungsverfahren kombinierte erfindungsgemäße Verfahren kann so aufeinander abgestimmt werden, daß neben einer 100%-Klassifizierung ein optimales Verhalten, d.h. eine schnelle Auslösung im Crashfall, sichergestellt ist und hierzu lediglich ein geringer Aufwand erforderlich ist, insbesondere zur digitalen Verarbeitung eine 4-Bit-Auflösung der Sensorsignale bzw. der hiervon abgeleiteten Daten ausreichend ist.

## Patentansprüche

1. Verfahren zur Auslösung einer passiven Sicherheitsvorrichtung in einem Fahrzeug für Fahrzeuginsassen, bei dem mittels elektrischer Sensoren (S1, S2), die einen kritischen Fahrzeugzustand detektieren, einer Auswerteschaltung und einem Auslösemittel in Abhängigkeit der von den Sensoren (S1, S2) erzeugten Beschleunigungssignale eine Aktivierung der Auslösemittel erfolgt, gekennzeichnet durch folgende Verfahrensschritte:
a) Quantifizierung der Sensorsignale im Zeittakt eines vorgegebenen ersten Zeitrasters,
b) Detektion derjenigen Beschleunigungssignale, deren zugehörige quantifizierten Sensorsignale (S_{1Q}, S_{2Q}) gleichzeitig eine Aufprallrichtung entgegen der Fahrtrichtung des Fahrzeuges anzeigen,
c) Erzeugung eines linear ansteigenden Crash-Signales (Z), falls in aufeinanderfolgenden Zeittakten die Beschleunigungssignale eine Aufprallrichtung entgegen der Fahrtrichtung des Fahrzeuges anzeigen,
d) Erzeugung einer mit dem Zeittakt eines zweiten Zeitrasters ansteigenden Auslöseschwelle (K₁ + R) zum Zeitpunkt des Beginns des linear ansteigenden Crash-Signals (Z), und
e) Aktivierung der Auslösemittel, falls der Wert des Crash-Signals (Z) die Auslöseschwelle (K₁ + R) erreicht.

2. Verfahren nach Anspruch 1, dadurch gekennzeichnet, daß die Auslöse-schwelle (K₁ + R) exponentionell ansteigt.

3. Verfahren nach Anspruch 2, dadurch gekennzeichnet, daß die Auslöse-schwelle (K₁ + R) sich additiv aus einem Konstantwert (K₁) und einem mit dem Zeittakt des zweiten Zeitrasters ansteigenden Zählwert (R) bildet.

4. Verfahren nach Anspruch 2 oder 3, dadurch gekennzeichnet, daß der Zeittakt (clk1) des zweiten Zeitrasters und der Konstantwert (K₁) der Auslöse-schwelle (K₁ + R) in Abhängigkeit der Fahrzeugsignatur bestimmt wird.

5. Verfahren nach einem der vorangehenden Ansprüche, dadurch gekennzeichnet, daß die quantifizierten Sensorsignale (S_{1q}, S_{2q}) zwischengespeichert werden.

6. Verfahren nach einem der vorangehenden Ansprüche, gekennzeichnet durch folgende Verfahrensschritte:
a) Erzeugung von Sensorsignalkennungswerten aus den quantifizierten Sensorsignalen (S_{1q}, S_{2q}) mittels einer Bewertungsfunktion,
b) Differenzierung der Sensorsignalkennungswerte,
c) Betragsbildung der differenzierten Sensorsignalkennungswerte,
d) Integration der Beträge der differenzierten Sensorsignalkennungswerte, und
e) Aktivierung der Auslösemittel, wenn der Integrationswert (P) eine Auslöseschwelle (K₃) erreicht.

7. Verfahren nach Anspruche 6, dadurch gekennzeichnet, daß als Bewertungsfunktion eine Addition der quantifizierten Sensorsignale (S_{1q}, S_{2q}) durchgeführt wird.

8. Verfahren nach Anspruch 6, dadurch gekennzeichnet, daß als Bewertungsfunktion eine Bewertungs-Matrix vorgesehen ist und daß den mit jedem Zeittakt erzeugten quantifizierten Sensorsignalen (S_{1q}, S_{2q}) ein Matrixwert zugeordnet wird.

9. Verfahren nach einem der vorangehenden Ansprüche, dadurch gekennzeichnet, daß zur Quantifizierung der Sensorsignale eine positive und eine negative Schwelle (S₁ₚ, S₁ₙ, S₁ₙ, S₂ₚ, S₂ₙ) eingesetzt wird.

10. Vorrichtung zur Auslösung einer passiven Sicherheitsvorrichtung in einem Fahrzeug für Fahrzeuginsassen, bei dem mittels elektrischer Sensoren (S1, S2), die einen kritischen Fahrzeugzustand detektieren, einer Auswerteschaltung und einem Auslösemittel in Abhängigkeit der von den Sensoren (S1, S2) erzeugten Beschleunigungssignale eine Aktivierung der Auslösemittel erfolgt,
a) wobei zwei der Sensoren (S1, S2) vorgesehen und im Fahrzeug derart angeordnet sind, daß deren Empfindlichkeitsachsen mit einem Winkel von +45° bzw. -45° gegen die Längsachse des Fahrzeuges in Fahrtrichtung gerichtet sind,
**dadurch gekennzeichnet, daß**
Mittel zur Durchführung der Verfahrenschritte nach einem der vorangehenden Ansprüche 1 bis 9 vorgesehen sind, wobei
b) zur Quantifizierung der Sensorsignale den Sensoren (S1, S2) jeweils zwei Quantifizierungskomparatoren (K₁₁, K₁₂, K₂₁, K₂₂) mit einem positiven und einem negativen Schwellwert (s₁ₚ, s₁ₙ, s₂ₚ, s₂ₙ) vorgesehen sind, und
c) zur Detektion der die entgegen der Fahrtrichtung gerichteten Aufprallrichtung anzeigenden Beschleunigungssignale ein Komparator (7) eingesetzt wird, der ein Ausgangssignal erzeugt, wenn die quantifizierten Sensorsignale (S_{1q}, S_{2q}) eines Zeittaktes gleichzeitig positive Vorzeichen aufweisen.

11. Vorrichtung nach Anspruch 10, bei der zur Erzeugung des Crash-Signals (Z) dem Komparator (7) eine zählerstufe (8) nachgeschaltet ist.

12. Vorrichtung nach einem der Ansprüche 10 oder 11, die zur Erzeugung der ansteigenden Auslöseschwelle (K₁ + R) eine als Schieberegister oder Zählerstufe arbeitende Funktionseinheit (10) aufweist, deren Schiebetakt (clk1) als zweites Zeitraster von einer Teilerstufe (13) erzeugt wird, und wobei dieser Funktionseinheit (10) ein Addierer (12) zur Erzeugung der Auslöseschwelle (K₁ + R) nachgeschaltet ist.

## Claims

1. A method of releasing a passive safety device for the occupants of a vehicle, wherein, with the aid of electrical sensors (S1, S2) that detect a critical state of the vehicle and an evaluating circuit and a releasing means, activation of said releasing means is effected in dependence on the acceleration signals produced by the sensors (S1, S2), which method is characterised by the following steps:
a) quantifying the sensor signals at the clock rate of a first given time raster,
b) detecting those acceleration signals whose appertaining quantified sensor signals (S_{1Q}, S_{2Q}) simultaneously indicate an impact direction opposed to the direction of travel of the vehicle,
c) producing a linearly increasing crash signal (Z) in the event that the acceleration signals indicate an impact direction opposed to the direction of travel of the vehicle in successive clocking periods,
d) producing a triggering threshold (K₁ + R) at the time point marking the beginning of the linearly increasing crash signal (Z) where said triggering threshold rises at the clock rate of a second time raster, and
e) activating the releasing means in the event that the value of the crash signal (Z) reaches the triggering threshold (K₁ + R).

2. A method in accordance with Claim 1, characterised in that the triggering threshold (K₁ + R) rises exponentially.

3. A method in accordance with Claim 2, characterised in that the triggering threshold (K₁ + R) is formed in additive manner from a constant value (K₁) and a count value (R) which increases at the clock rate of the second time raster.

4. A method in accordance with Claim 2 or 3, characterised in that the clock rate (clkl) of the second time raster and the constant value (K₁) of the triggering threshold (K₁ + R) are determined in dependence on the signature of the vehicle.

5. A method in accordance with any of the preceding Claims, characterised in that the quantified sensor signals (S_{1q}, S_{2q}) are buffer stored.

6. A method in accordance with any of the preceding Claims, characterised by the following steps:
a) producing characteristic sensor signal values from the quantified sensor signals (S_{1q}, S_{2q}) by means of a weighting function,
b) differentiating the characteristic sensor signal values,
c) forming the modulii of the differentiated characteristic sensor signal values,
d) integrating the modulii of the differentiated characteristic sensor signal values, and
e) activating the releasing means when the integration value (P) reaches a triggering threshold (K₃).

7. A method in accordance with Claim 6, characterised in that the weighting function takes the form of an addition of the quantified sensor signals (S_{1q}, S_{2q}).

8. A method in accordance with Claim 6, characterised in that the weighting function is provided in the form of a weighting matrix and in that a matrix value is associated with the quantified sensor signals (S_{1q}, S_{2q}) produced at each clock pulse.

9. A method in accordance with any of the preceding Claims, characterised in that a positive and a negative threshold (s₁ₚ, s₁ₙ, s₁ₙ, s₂ₚ, s₂ₙ) is employed for quantifying the sensor signals.

10. A device for releasing a passive safety device for the occupants of a vehicle, wherein, with the aid of electrical sensors (S1, S2) that detect a critical state of the vehicle and an evaluating circuit and a releasing means, activation of said releasing means is effected in dependence on the acceleration signals produced by the sensors (S1, S2),
a) and wherein there are provided two sensors (S1, S2) which are arranged in the vehicle in such a manner that their axes of sensitivity are aligned at an angle of +45° and -45° relative to the longitudinal axis of the vehicle in the direction of travel,
characterised in that
there are provided means for carrying out the method steps in accordance with any of the preceding Claims 1 to 9, whereby
b) for the purposes of quantifying the sensor signals, two quantifying comparators (K₁₁, K₁₂, K₂₁, K₂₂) having a positive and a negative threshold value (s₁ₚ, s₁ₙ, s₂ₚ, s₂ₙ) are provided for each respective sensor (S1, S2), and
c) for the purposes of detecting those acceleration signals indicating a direction of impact directed against the direction of travel, use is made of a comparator (7) which produces an output signal when the quantified sensor signals (S_{1q}, S_{2q}) occurring in one clock period simultaneously exhibit positive prefix signs.

11. A device in accordance with Claim 10, in which a counting stage (8) is connected to the output of the comparator (7) for producing the crash signal (Z).

12. A device in accordance with either of Claims 10 and 11, in which, for the purposes of producing the rising triggering threshold (K₁ + R), there is provided a functional unit (10) which operates as a shift register or as a counting stage and whose stepping rate (clkl) is produced in the form of a second time raster by a divider stage (13), and wherein an adder (12) is connected downstream of this functional unit (10) for producing the triggering threshold (K₁ + R).

## Revendications

1. Procédé pour déclencher un dispositif de sécurité passif dans un véhicule pour des passagers de ce véhicule, dans lequel à l'aide de capteurs électriques (S1,S2), qui détectent un état critique du véhicule, d'un circuit d'exploitation et d'un moyen de déclenchement, est produite, en fonction des signaux d'accélération produits par les capteurs (S1,S2), une activation du moyen de déclenchement, caractérisé par les étapes opératoires suivantes :
a) quantification des signaux des capteurs à la cadence d'une première trame temporelle prédéterminée,
b) détection des signaux d'accélération, dont les signaux quantifiés associés (S_{1Q},S_{2Q}) des capteurs indiquent simultanément une direction de choc en sens opposé de la direction de déplacement du véhicule,
c) production d'un signal de collision (Z), qui augmente linéairement, dans le cas où pendant des intervalles de cadence temporelle successifs, les signaux d'accélération indiquent une direction de choc en sens opposé de la direction de déplacement du véhicule,
d) production d'un seuil de déclenchements (K₁ + R), qui augmente avec la cadence temporelle d'une seconde trame temporelle, à l'instant du début du signal de collision (Z) qui augmente linéairement, et
e) activation des moyens de déclenchement, dans le cas où la valeur du signal de collision (Z) atteint le seuil de déclenchement (K₁ + R).

2. Procédé selon la revendication 1, caractérisé en ce que le seuil de déclenchement (K₁ + R) augmente exponentiellement.

3. Procédé selon la revendication 2, caractérisé en ce que le seuil de déclenchement (K₁ + R) est formé de façon additive à partir d'une valeur constante (K₁) et d'une valeur de comptage (R) qui augmente à la cadence de la seconde trame temporelle.

4. Procédé selon la revendication 2 ou 3, caractérisé en ce que la cadence (clkl) de la seconde trame temporelle et la valeur constante (K₁) du seuil de déclenchement (K₁ + R) sont déterminées en fonction de la signature du véhicule.

5. Procédé selon l'une des revendications précédentes, caractérisé en ce que les signaux quantifiés (S_{1q},S_{2q}) des capteurs sont mémorisés temporairement.

6. Procédé selon l'une des revendications précédentes, caractérisé par les étapes opératoires suivantes :
a) production de valeurs caractéristiques de signaux de capteurs à partir des signaux quantifiés (S_{1q},S_{2q}) des capteurs à l'aide d'une fonction de pondération,
b) différentiation des valeurs caractéristiques des signaux des capteurs,
c) formation de la valeur absolue des valeurs caractéristiques différentiées des signaux des capteurs,
d) intégration des valeurs absolues des valeurs caractéristiques différentiées des signaux des capteurs, et
e) activation du moyen de déclenchement, lorsque la valeur d'intégration (P) atteint un seuil de déclenchement (K₃).

7. Procédé selon la revendication 6, caractérisé en ce qu'une addition des signaux quantifiés (S_{1q},S_{2q}) des capteurs est exécutée en tant que fonction de pondération.

8. Procédé selon la revendication 6, caractérisé en ce qu'il est prévu comme fonction de pondération une matrice de pondération et qu'une valeur matricielle est associée aux signaux quantifiés (S_{1q},S_{2q}) des capteurs, produits avec chaque intervalle de cadence.

9. Procédé selon l'une des revendications précédentes, caractérisé en ce que pour la quantification des signaux des capteurs on utilise un seuil positif et un seuil négatif (S₁ₚ,S₁ₙ,S₁ₙ,S₂ₚ,S₂ₙ).

10. Dispositif pour déclencher un dispositif de sécurité passive dans un véhicule pour des passagers du véhicule, dans lequel à l'aide de capteurs électriques (S1,S2), qui détectent un état critique du véhicule, d'un circuit d'exploitation et d'un moyen de déclenchement est produite, en fonction des signaux d'accélération produits par les capteurs (S1,S2), une activation du moyen de déclenchement,
a) dans lequel deux des capteurs (S1,S2) sont prévus et disposés dans le véhicule de telle sorte que leurs axes de sensibilité sont orientés en faisant un angle de +45° et de -45° par rapport à l'axe longitudinal du véhicule dans la direction de déplacement,
caractérisé en ce que
des moyens pour la mise en oeuvre d'étapes opératoires selon l'une des revendications précédentes 1 à 9 sont prévus, auquel cas
b) pour la quantification des signaux des capteurs, il est prévu respectivement deux comparateurs de quantification (K₁₁,K₁₂,K₂₁,K₂₂) avec une valeur de seuil positive et une valeur de seuil négative (S₁ₚ, S₁ₙ,S₂ₚ, S₂ₙ), et
c) pour la détection des signaux d'accélération indiquant la direction de choc dirigée en sens opposé de la direction de déplacement, on utilise un comparateur (7), qui produit un signal de sortie lorsque les signaux quantifiés (S_{1q},S_{2q}) des capteurs pour un intervalle de cadence possèdent simultanément des signes positifs.

11. Dispositif selon la revendication 10, dans lequel pour la production du signal de collision (Z), un étage de comptage (8) est branché en aval du comparateur (7).

12. Dispositif selon la revendication 10 ou 11, qui comporte, pour la production du seuil de déclenchement montant (K₁ + R), une unité fonctionnelle (10), qui travaille en tant que registre à décalage ou étage de comptage et dont la cadence de décalage (clkl) est produite en tant que seconde trame temporelle par un étage diviseur (13), et dans lequel un additionneur (12) servant à produire le seuil de déclenchement (K₁ + R) est branché en aval de cette unité fonctionnelle (10).
